# EUROPEAN PATENT SPECIFICATION

(11) **EP 1 083 563 B1**
(45) Date of publication and mention of the grant of the patent: **25.01.2006**
(21) Application number: 99830572.6
(22) Date of filing: 10.09.1999
(51) Int. Cl.: G11B 23/03, G11B 7/00

(54) **Support card for data storage unit**
Trägerkarte für Datenspeichereinheit
Carte support pour unité d'enregistrement de données

(43) Date of publication of application: 14.03.2001
(73) Proprietor: International Consulting S.r.l., 20059 Vimercate (MI) (IT)
(72) Inventor: Perego, Luciano, 20050 Mezzago (MI) (IT)
(74) Representative: Tansini, Elio Fabrizio

(56) References cited:
- WO-A-97/21219
- GB-A- 2 059 666
- US-A- 4 903 256
- PATENT ABSTRACTS OF JAPAN vol. 007, no. 070 (P-185), 23 March 1983 (1983-03-23) & JP 57 212669 A (MATSUSHITA DENKI SANGYO KK), 27 December 1982 (1982-12-27)
- PATENT ABSTRACTS OF JAPAN vol. 011, no. 248 (P-604), 13 August 1987 (1987-08-13) & JP 62 054881 A (SONY CORP), 10 March 1987 (1987-03-10)
- PATENT ABSTRACTS OF JAPAN vol. 1996, no. 06, 28 June 1996 (1996-06-28) & JP 08 031134 A (VAN P R KK), 2 February 1996 (1996-02-02)
- PATENT ABSTRACTS OF JAPAN vol. 009, no. 221 (P-386), 7 September 1985 (1985-09-07) & JP 60 079581 A (DAINIPPON INSATSU KK), 7 May 1985 (1985-05-07)
- PATENT ABSTRACTS OF JAPAN vol. 010, no. 198 (P-476), 11 July 1986 (1986-07-11) & JP 61 039990 A (DAINIPPON PRINTING CO LTD), 26 February 1986 (1986-02-26)

## Description

The present invention relates to a support card for a data storage unit, of the type comprising the features set forth in the preamble of claim 1.

It is known that there are different types of cards of standardized rectangular shape, usually used as credit cards or telephone cards for example, which are essentially defined by a plate-like or flat support of plastic material with which a digital memory unit is associated.

In a first known type of card, the digital memory essentially consists of a magnetic band extending over one of the two opposite faces of the flat body, parallelly of one of the major sides of said body.

In a second known type of card commercially identified as "Smart Card", the digital memory is essentially made up of a microchip incorporated into the thickness of the flat body and having contact elements appearing on one of the faces of the flat body itself.

Also proposed in recent times have been cards of standardized rectangular shape in which the digital memory is of the optical type, i.e. of the type commonly utilized in manufacturing compact discs.

Embodiments of these cards are described in Patent Applications JP 4040586 and WO 99/00765. Modalities for accomplishing known cards having an optical memory and the consequent structure of same do not have important differences as compared with the features.encountered with reference to compact discs. In conclusion, a known card with an optical memory essentially consists of a compact disc of rectangular conformation, in which the area intended for data storage is delimited by an annulus substantially tangent to the major sides of the card and concentric with a through opening disposed at a centered position on the card itself.

Appropriate centering elements, embodied for example by ridges in the form of an arc of a circle or projections of different shapes are arranged on a reading face of the card, intended for resting on an extractable tray being part of an usual reading unit for compact discs, in order to enable correct positioning of the card itself on said tray.

It is also known, from document JP57212669, a cartridge to be inserted into a drive unit which cartridge includes a casing containing a recording medium disc to be driven by the drive unit. The disc has a hub fixed at its center and center windows are provided at opposite sides of the casing and allow the hub to be inserted therethrough. Finally, document US4903256 discloses a card which comprises a rotatory system optical recording medium, a case body having a holding space which holds the optical recording medium freely detachably and a protective cover which protects the surface of the optical recording medium held on said case body. The case body is provided with an opening means for the protective cover so that the optical recording medium can be detached from said holding space.

After the above statements, the Applicant has wished to analyse the possibility of providing a card with greatly improved versatility of use and memory capabilities as compared with the cards of the known art. In particular, the Applicant has aimed at enabling coexistence of several memory units even of different typologies on one and the same card, as well as the opportunity of omitting, removing and/or replacing at least one of the memory units to be combined with the card itself.

In more detail, it is an object of the present invention to provide a support card for data storage unit, comprising the features set forth in the characterizing part of claim 1.

Further features and advantages will become more apparent from the detailed description of a preferred but non-exclusive embodiment of a support card for a data storage unit in accordance with the present invention. This description will be taken hereinafter with reference to the accompanying drawings, given by way of non-limiting example, in which:

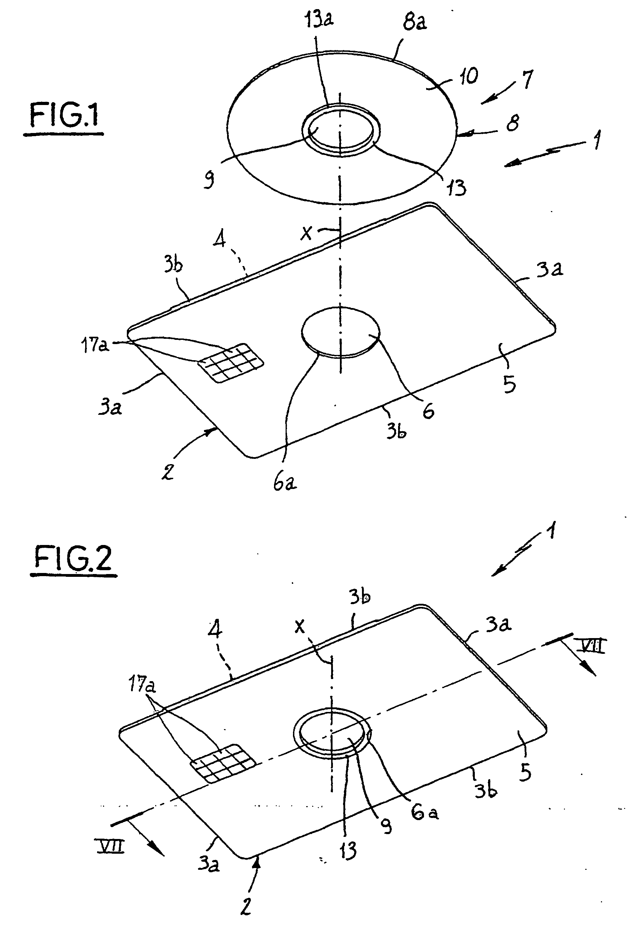

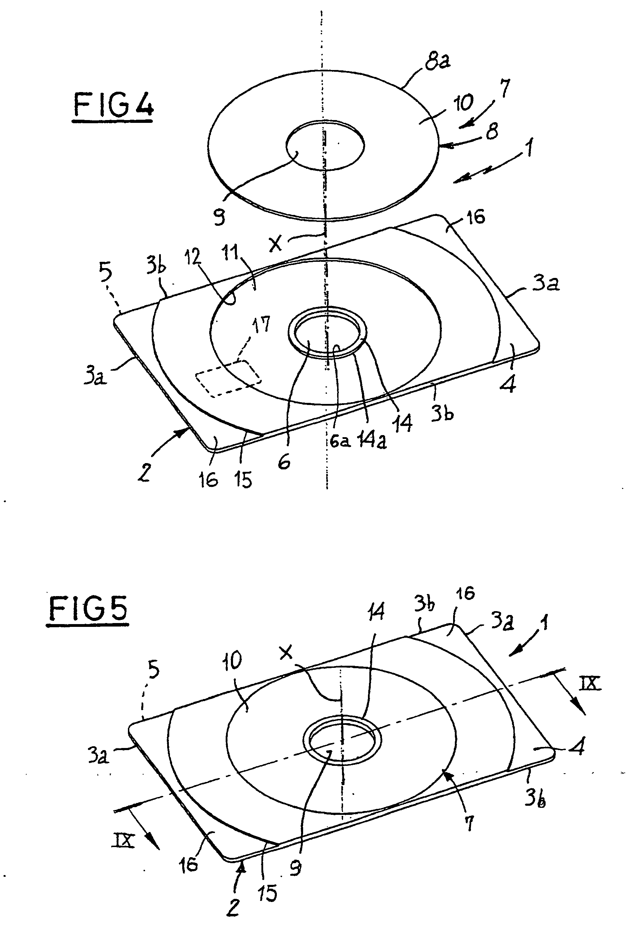

- Fig. 1 is an exploded perspective bottom view of a support card in accordance with the present invention;
- Fig. 2 shows the card in Fig. 1 with the optical memory unit mounted on the flat support;

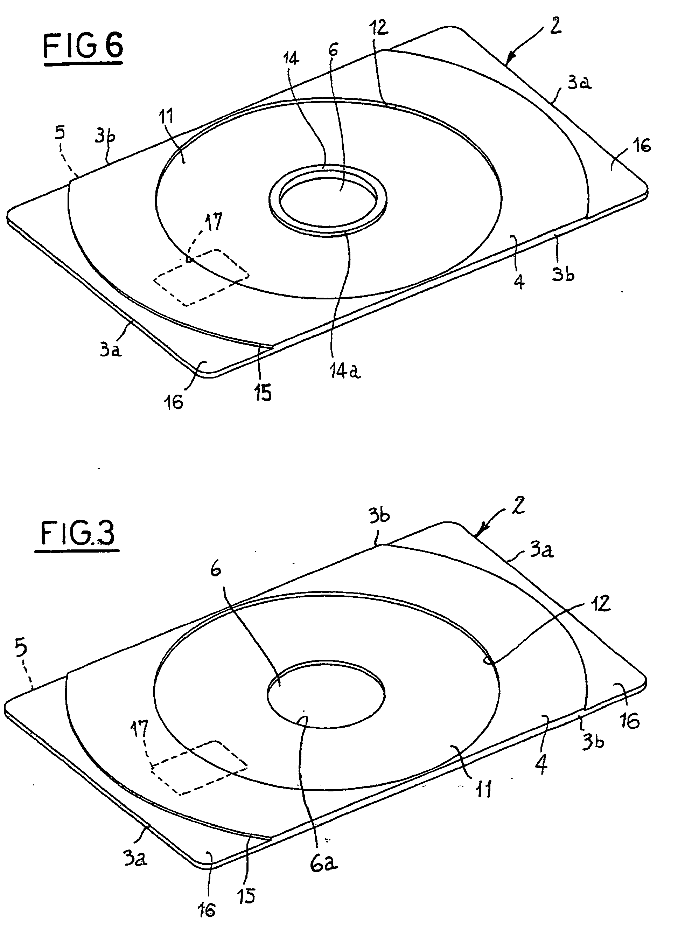

- Fig. 3 shows the structure of a flat support being part of the subject card, to an enlarged scale relative to Figs. 1 and 2 and seen from the opposite side relative to Fig. 1;
- Fig. 4 is an exploded perspective top view of a support card in accordance with a second embodiment of the invention;
- Fig. 5 shows the card in Fig. 4 in an assembled condition;
- Fig. 6 shows a flat support being part of the card shown in Figs. 4 and 5, to an enlarged scale;
- Fig. 7 is a section taken along line VII-VII in Fig. 2, showing coupling between a first memory unit and the flat support, in accordance with a preferential embodiment of the invention;
- Fig. 8 shows an alternative embodiment in respect of Fig. 7;
- Fig. 9 is a section taken along line IX-IX in Fig. 5, showing a different embodiment for achieving coupling between the first memory unit and the flat support;
- Fig. 10 shows an alternative embodiment in respect of Fig. 8.

With reference to the drawings, a support,card for a data storage unit in accordance with the present invention has been generally identified by reference numeral 1.

Card 1 essentially comprises a flat support 2, preferably made of plastic material, having a perimetral edge of a substantially rectangular profile defined by minor sides 3a and major sides 3b preferably of standardized sizes, corresponding to those of a conventional credit card.

The perimetral edge 3a, 3b delimits, on the flat support 2, respectively opposite first 4 and second 5 faces having a through opening 6 preferably disposed at a centered position in the flat support 2. In more detail, the through opening 6 has a geometric axis "X" intersecting the crossing point between the diagonals in the rectangular configuration of the flat support 2.

The first face 4 is intended for carrying a first data storage unit 7, hereinafter referred to as first storage unit, circumscribing the through opening 6.

The first storage unit 7 is preferably of a disc-shaped type, i.e. it comprises a plate-like body 8 having a centering through hole 9 and at least one area 10 for data storage, preferably of the optical type, such disposed as to form an annulus extending concentric with the centering through hole 9 and substantially tangent to the major sides 3b of the flat support 2.

In particular, it is preferably provided for the first storage unit 7, or at least the plate-like body 8 thereof, to be essentially defined by a DVD (digital versatile disc) disc-half the outer diameter of which substantially corresponds to the size of the minor sides 3a of the flat support 2. To the ends of the present description, by "disc-half" it is intended one of the two disc-shaped elements that are usually coupled in mutual superposition relationship when DVDs following conventional techniques are made. In this connection please see document EP 866450 for further explanations and information on how DVDs are made.

The plate-like body 8 preferably has a circular conformation, delimited by an outer circumferential edge 8a, but the plate-like body may also have a different conformation, a quadrangular conformation for example, provided it is contained within the extension of the perimetral edge 3a, 3b of the flat support 2.

Disposed on the first face 4 of the flat support 2, at the through opening 6, is means for engagement of the first storage unit 7, preferably comprising a surface recess 11 formed on the first face itself. The surface recess 11 is able to house the first storage unit 7 when the latter, through a locating surface 7a thereof, is brought in abutment on the surface recess itself.

Preferably, the shape of the surface recess 11 matches that of the first storage unit 7 and its depth corresponds to the thickness of said storage unit. In this way the first storage unit 7, when housed in the surface recess 11, has a reading surface 7b disposed flush with the first face 4 of the flat support 2.

In particular, in the embodiment shown, the surface recess 11 has a circular conformation and is delimited by a circumferential ridge 12 substantially tangent to the major sides 3b of the flat support 2.

Advantageously, engagement of the first storage unit 7 with the flat support 2 further involves the aid of mechanical-interfacing means comprising a fitting element for example, for engagement between the storage unit itself and the support card 1, preferably in a removable manner.

This mechanical-interfacing means preferably comprises a collar 13 axially projecting from the locating surface 7a at the centering through hole 9 having an inner diameter corresponding to that of the centering hole usually provided in a conventional compact disc or DVD. Collar 13 defines a shoulder 13a facing away from the geometric axis of the through hole. Shoulder 13a is able to cooperate with an inner circumferential edge 6a of the through opening 6 to accomplish a tight mechanical-interference fit with said opening.

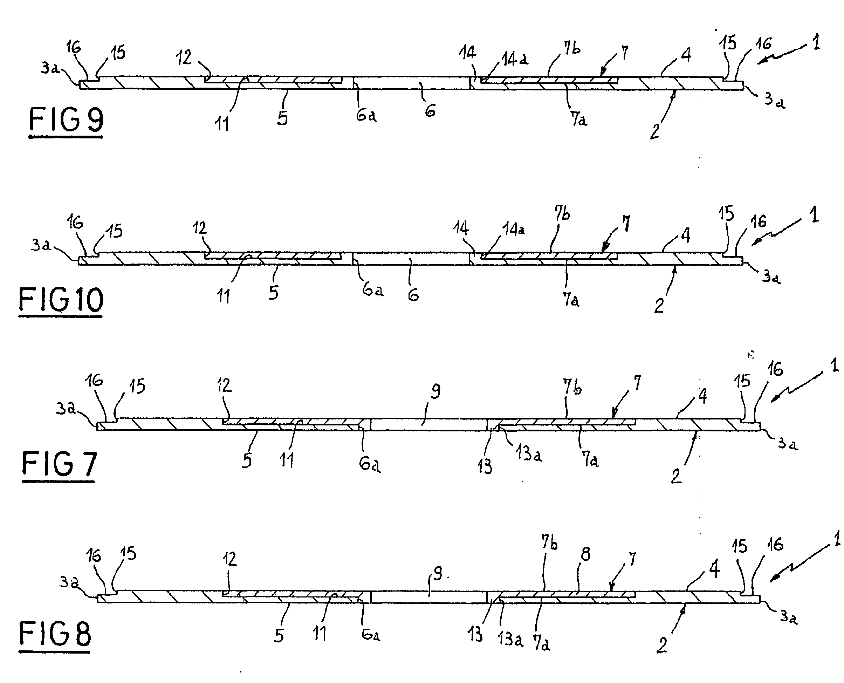

In a preferential embodiment shown in Fig. 7, shoulder 13a of collar 13 has a substantially cylindrical conformation in the same manner as the inner circumferential edge 6a of the through opening 6. The outer diameter of collar 13 is slightly greater than the inner diameter of opening 6, so as to carry out a tight interference fit of the collar into the opening.

In accordance with an alternative embodiment shown in Fig. 8, it may be advantageously provided that shoulder 13a defined by collar 13 and/or the inner circumferential edge 6a of the through opening 6 should be of truncated conical form. In this manner shoulder 13a defines an undercut turned towards the flat body 8, whereas the inner circumferential edge 6a defines an undercut turned towards the second face 5 of the flat support 2. Due to the presence of these undercuts a mechanical-interference snap fitting of collar 13 in opening 6 occurs.

To make snap-fitting easier, radial cuts may be advantageously arranged at collar 13 and/or opening 6, which cuts divide the collar itself and/or the inner circumferential edge 6a into a plurality of elastically-deformable portions in the form of an arc of a circle.

In a different embodiment, shown in Figs. 4, 5, 9 and 10, instead of collar 13 associated with the first memory unit 7 at least one grip lug 14 formed at the inner circumferential edge 6a of said through opening 6 is provided to be arranged. The grip lug 14, preferably having an annular conformation concentric with the through opening 6, defines a coupling ridge 14a facing away from the geometric axis X of the through opening 6, to engage, by interference fit, the centering hole 9 arranged in the first storage unit 7. In this embodiment, the through opening 6 will have the same inner diameter as the centering hole usually provided in compact discs or DVDs, whereas the centering hole 9 arranged in the first storage unit 7 will have a conveniently bigger diameter.

In this case too, both the grip lug 14 and the centering hole 9 may have a cylindrical configuration, with diameters slightly differentiated from each other to cause mutual coupling by forced fitting (Fig. 9). Alternatively, the grip lug 14 and/or centering hole 9 may be of truncated conical form as shown in Fig. 10, so as to define mutually opposite undercuts turned towards the second face 5 of the flat support 2 and the reading surface 7b of the first storage unit 7, respectively.

In addition to the collar 13 and/or the grip lug 14, the outer circumferential edge 8a of the plate-like body 8 and the circumferential ridge 12 of the surface recess 11 could be such arranged that mutual engagement by mechanical-interference fit will occur. Said outer circumferential edge 8a and circumferential ridge 12 may have a cylindrical configuration, with differentiated diameters to obtain forced coupling of the plate-like body 8 into the surface recess 11. Alternatively, the outer circumferential edge 8a and/or circumferential ridge 12 may have, at least as regards part of their circumferential extension, a frusto-conical conformation, to form mutually opposite undercuts turned towards the reading surface 7b and the surface recess 11, respectively.

Further associated with card 1 may be means 15, 16 for centering of the flat support 2 in a reading and/or data recording device on the first storage unit 7, not shown as known per se and conventional. Advantageously, this centering means 15, 16 may comprise centering shoulders 15 defined by auxiliary surface recesses 16, of a curved profile for example, formed in the first face 4 close to the minor sides 3a of the perimetral edge of the flat support 2.

In addition, associated with the support card 1 may advantageously be at least a further data storage unit 17 accessible from the second face 5 of the flat support 2. This further storage unit 17 can be advantageously made in the form of a microchip incorporated into the flat support 2, within a seat arranged therein, and having contact elements 17a appearing from the second face 5.

The present invention achieves the intended purposes.

Unlike the known art, in which any type of memory must necessarily be accomplished as a single unit with the flat support of the card, the invention enables a memory unit, in particular of the optical type, to be associated with the card, subsequently to production of the card itself. This circumstance opens a great number of new possibilities of use of the cards as digital memory media.

In particular, it is for example possible to arrange a card provided with a fixed digital storage unit, of the microchip type for example, with which an optical memory, optionally interchangeable, may be associated in case of need.

An optical memory made in the form of a DVD disc-half can also advantageously coexist with a microchip memory even if, as it appears from the depicted examples, these memories extend over mutually superposed regions on the flat support. This would not be possible if the optical memory were made in the form of a compact disc, because thickness of said memory, corresponding to the overall thickness of the card, would involve penetration, by the microchip memory, into regions intended for receiving optical data.

On the contrary, due to use of a DVD disc-half, of a thickness of 0.6 mm, a sufficient thickness is left free in the flat support for housing the microchip memory without the latter projecting in the surface recess 11 and thereby occupying regions intended for the optical memory. In this connection it is to be noted that, due to dimensional standardization of the cards of the type in reference, thickness of same must not exceed 1.2 mm, the microchip memory only engaging a thickness of about 0.5 mm.

It should be also appreciated that since several memory units can be integrated into one and the same card, there will be an increase in the amount of data storable on the card itself. In addition, with use of a DVD optical memory, storage capacities close to about 1 GB may be easily obtained.

## Claims

1. A support card for data storage units, comprising a flat support (2) having a perimetral edge of substantially rectangular profile (3a, 3b) delimiting respectively opposite first and second faces (4, 5) and a through opening (6) through said first and second faces (4, 5), at least said first face (4) carrying a plate-like data storage unit (7) circumscribing said through opening (6),
**characterized in that** it further comprises means (11) for engagement of said data storage unit (7) by a tight interference fit with said first face (4) at the through opening (6).

2. A support card as claimed in claim 1, wherein said engagement means comprises an inner circumferential edge (6a) of said through opening (6) arranged to engage, by interference fit, a collar (13) projecting from said data storage unit (7).

3. A support card as claimed in claim 2, wherein the edge (6a) of said through opening (6) forms an undercut turned towards the second face (5) of the flat support (2).

4. A support card as claimed in claim 1, wherein said engagement means comprises at least one grip lug (14) formed at an inner circumferential edge (6a) of said through opening (6) and defining a coupling ridge (14a) facing away from a geometric axis (X) of said through opening (6) to get engaged by interference fit in a centering hole (9) provided in said data storage unit (7).

5. A support card as claimed in claim 4, wherein said grip lug (14) has an annular conformation concentric with said through opening (6).

6. A support card as claimed in claim 4, wherein said coupling ridge (14a) forms an undercut turned towards the second face (5) of the flat support (2).

7. A support card as claimed in claim 1, wherein it further comprises a surface recess (11) formed in the first face (4) to house said data storage unit (7).

8. A support card as claimed in claim 7, wherein said surface recess (11) has a circular conformation.

9. A support card as claimed in claim 8, wherein said surface recess (11) is delimited by a circumferential ridge (12) substantially tangent to the major sides (3a) of said perimetral edge of rectangular profile of the flat support (2).

10. A support card as claimed in claim 9, wherein said circumferential ridge (12) is arranged to engage, by interference fit, an outer circumferential edge (8a) of said data storage unit (7).

11. A support card as claimed in claim 10, wherein said circumferential ridge (12) forms an undercut turned towards said surface recess (11).

12. A support card as claimed in claim 1, further comprising another data storage unit (17) accessible from said second face of the flat support (2).

13. A support card as claimed in claim 12, wherein said further storage unit (17) is made in the form of a microchip incorporated in the flat support (2) and having contact elements (17a) appearing on said second face (5).

14. A support card as claimed in claim 1, wherein said through opening (6) is disposed concentric with the perimetral edge (3a, 3b) of the flat support (2).

15. A support card as claimed in claim 1, further comprising means for centering the flat support (2) in a reading device of said storage unit.

16. A support card as claimed in claim 15, wherein said centering means comprises centering shoulders defined by auxiliary surface recesses present in said first face (4) close to the minor sides (3a) of said perimetral edge of rectangular profile (3a, 3b).

17. A support card as claimed in claim 1, wherein said storage unit (7) comprises:
- a plate-like body (8) having a centering through hole (9) ;
- at least one region (10) intended for data storage and extending concentric with said centering through hole (9) ;
- mechanical-interfacing means (13) for engagement of said storage unit (7) on a support card (1).

18. A support card as claimed in claim 17, wherein said mechanical-interfacing means comprises at least one tight fitting element (13).

19. A support card as claimed in claim 17, wherein said mechanical-interfacing means comprises a collar (13) axially projecting at said centering through hole (9) and defining a shoulder (13a) facing away from a geometric axis of the through hole (9) and arranged to get engaged by interference fit in said through opening (6).

20. A support card as claimed in claim 19, wherein said shoulder (13a) defines an undercut turned towards the plate-like body (8).

21. A support card as claimed in claim 17, wherein said mechanical-interfacing means comprises an edge of said centering through hole (9) arranged to engage by interference fit a grip lug (14) being part of said engagement means disposed on said first face (4) of the flat support (2).

22. A support card as claimed in claim 21, wherein the edge of said through hole (9) forms an undercut turned towards a reading face (7b) of said storage unit (7).

23. A support card as claimed in claim 17, wherein said mechanical-interfacing means comprises an outer circumferential edge (8a) of said plate-like body (8), arranged to engage by mechanical-interference fit with a circumferential ridge (12) presented by said flat support (2).

24. A support card as claimed in claim 23, wherein said outer circumferential edge (8a) defines an undercut turned towards a reading face (7b) of said plate-like body (8).

25. A support card as claimed in claim 17, wherein said plate-like body (8) is essentially defined by a DVD disc-half.

## Patentansprüche

1. Trägerkarte für Datenspeichereinheit, umfassend einen blattförmigen Träger (2) mit einem Außenrand mit im wesentlichen rechteckigem Profil (3b, 3b), begrenzend eine erste und eine zweite, jeweils abgewandte Fläche (4, 5) und eine durchgehende Öffnung (6) durch die erste und die zweite Fläche (4, 5) hindurch, wobei mindestens die erste Fläche (4) eine plattenförmige, die durchgehende Öffnung (6) umschreibende Datenspeichereinheit (7) trägt,
**dadurch gekennzeichnet, dass** sie überdies Mittel (7) für den Eingriff der Datenspeichereinheit (7) über eine Steckverbindung durch Überschneidung mit der ersten Fläche (4) im Bereich der durchgehenden Öffnung (6) umfasst.

2. Trägerkarte nach Anspruch 1, bei der die Eingriffsmittel einen inneren Umfangsrand (6a) der durchgehenden Öffnung (6) umfassen, der bereitgestellt ist, durch Überschneiden mit einer von der Datenspeichereinheit (7) vorstehendem Kragen (13) in Eingriff zu kommen.

3. Trägerkarte nach Anspruch 2, bei der der Rand (6a) der durchgehenden Öffnung (6) eine Hinterschneidung bildet, die in Richtung der zweiten Fläche (5) des blattförmigen Trägers (2) gerichtet ist.

4. Trägerkarte nach Anspruch 1, bei der die Eingriffsmittel mindestens einen Greifvorsprung (14) umfassen, der im Bereich eines inneren Umfangsrandes (6a) der durchgehenden Öffnung (6) ausgenommen ist und eine Verbindungsnase (14a) festlegt, die sich von einer gegenüber der geometrischen Achse (X) der durchgehenden Öffnung (6) abgewandten Seite zeigt, um durch Überschneiden eine Zentrierbohrung (9) zu erfassen, die in der Datenspeichereinheit (7) bereitgestellt ist.

5. Trägerkarte nach Anspruch 1, bei der der Greifvorsprung (14) eine ringförmige Ausbildung aufweist, die zur durchgehenden Öffnung (6) konzentrisch ist.

6. Trägerkarte nach Anspruch 4, bei der die Verbindungsnase (14) eine Hinterschneidung bildet, die in Richtung der zweiten Fläche (5) des blattförmigen Trägers (2) gerichtet ist.

7. Trägerkarte nach Anspruch 1, bei der sie überdies eine Oberflächenvertiefung (11) aufweist, die an der ersten Fläche (4) zur Aufnahme der Datenspeichereinheit (7) ausgenommen ist.

8. Trägerkarte nach Anspruch 7, bei der die Oberflächenvertiefung (11) eine kreisförmige Ausbildung aufweist.

9. Trägerkarte nach Anspruch 8, bei der die Oberflächenvertiefung (11) durch eine Umfangsnase (12) begrenzt ist, die zu den größeren Seiten (3a) des Umfangsrandes mit rechteckigem Profil des blattförmigen Trägers (2) tangential ist.

10. Trägerkarte nach Anspruch 9, bei der die Umfangsnase (12) bereitgestellt ist, durch Überschneiden einen äußeren Umfangsrand (8a) der Datenspeichereinheit (7) zu erfassen.

11. Trägerkarte nach Anspruch 10, bei der die Umfangsnase (12) eine Hinterschneidung bildet, die in Richtung der Oberflächenvertiefung (11) gerichtet ist.

12. Trägerkarte nach Anspruch 1, die überdies eine weitere Datenspeichereinheit (17) umfasst, die von der zweiten Fläche des blattförmigen Trägers (2) zugänglich ist.

13. Träger karte nach Anspruch 12, bei der die weitere Speichereinheit (17) in der Form eines Mikrochips ausgeführt ist, der im blattförmigen Träger (2) eingebracht ist und Kontaktelemente (17a) aufweist, die sich von der zweiten Fläche (5) zeigen.

14. Trägerkarte nach Anspruch 1, bei der die durchgehende Öffnung (6) konzentrisch gegenüber dem Außenrand (3a, 3b) des blattförmigen Körpers (2) angeordnet ist.

15. Trägerkarte nach Anspruch 1, umfassend überdies Zentriermittel des blattförmigen Trägers (2) in einer Ablesevorrichtung der Speichereinheit.

16. Trägerkarte nach Anspruch 15, in der die Zentriermittel Zentrierschultern umfassen, die durch Hilfsoberflächenvertiefungen festgelegt sind, die die erste Fläche (4) in der Nähe von kleineren Seiten (3a) des Außenrandes mit rechteckigem Profil (3a, 3b) aufweisen.

17. Trägerkarte nach Anspruch 1, bei der die Speichereinheit (7) umfasst:
- einen blattförmigen Körper (8), der eine durchgehende Zentrierbohrung (9) aufweist;
- mindestens eine Fläche (10), die für die Datenspeicherungen bereitgestellt ist, die sich konzentrisch zur durchgehenden Zentrierbohrung (9) erstreckt;
- mechanische Zusammenschaltmittel (13) für den Eingriff der Speichereinheit (7) an einer Trägerkarte (1).

18. Trägerkarte nach Anspruch 17, bei der die mechanischen Zusammenschaltmittel mindestens ein Steckelement (13) umfassen.

19. Trägerkarte nach Anspruch 17, bei der die mechanischen Zusammenschaltmittel einen Kragen (13) umfassen, der koaxial im Bereich der durchgehenden Zentrierbohrung (9) vorsteht und eine Schulter (13a) festlegt, die von einer zur geometrischen Achse der durchgehenden Bohrung (9) abgewandten Seite gerichtet und bereitgestellt ist, durch Überschneiden in der durchgehenden Öffnung (6) in Eingriff zu kommen.

20. Trägerkarte nach Anspruch 19, bei der die Schulter (13a) eine der Überschneidung festlegt, die in Richtung des blattförmigen Körpers (8) gerichtet ist.

21. Trägerkarte nach Anspruch 17, bei der die mechanischen Zusammenschaltmittel einen Rand der durchgehenden Zentrierbohrung (9) erfassen, der bereitgestellt ist, durch Überschneiden mit einem Greifvorsprung (14) in Eingriff zu kommen, der den Eingriffsmitteln angehört, die an der ersten Fläche 4 des blattförmigen Trägers (2) angeordnet sind.

22. Trägerkarte nach Anspruch 21, in der der Rand der durchgehenden Bohrung (9) eine Unterschneidung aufweist, die in Richtung einer Ablesefläche (7b) gerichtet ist, die die Speichereinheit (7) aufweist.

23. Trägerkarte nach Anspruch 17, in der die mechanischen Zusammenschaltmittel einen äußeren Umfangsrand (8a) des blattförmigen Körpers (8) aufweisen, der bereitgestellt ist, durch mechanisches Überschneide in einer Umfangsnase (12) in Eingriff zu kommen, die der blattförmige Träger (2) aufweist.

24. Trägerkarte nach Anspruch 23, in der der äußere Umfangsrand (8a) eine Hinterschneidung festlegt, die in Richtung einer Ablesefläche (7b) gerichtet ist, die der blattförmige Körper (8) aufweist.

25. Trägerkarte nach Anspruch 17, in der der blattförmige Körper (8) im wesentlichen durch eine Diskettenhälfte DVD festgelegt ist.

## Revendications

1. Carte support pour unités d'enregistrement de données, comprenant un support plat (2) ayant un bord périmétrique de profil sensiblement rectangulaire (3a, 3b) délimitant une première et une deuxième faces respectivement opposées (4, 5) et une ouverture de passage (6) à travers lesdites première et deuxième faces (4, 5), au moins ladite première face (4) portant une unité d'enregistrement de données (7) en forme de plaque circonscrivant ladite ouverture de passage (6), **caractérisée en ce qu'**elle comporte en outre des moyens (11) pour l'engagement de ladite unité (7) d'enregistrement de données, par ajustement serré, à ladite première face (4) en correspondance avec ladite ouverture de passage (6).

2. Carte support selon la revendication 1, dans laquelle lesdits moyens d'engagement comportent un bord circonférentiel intérieur (6a) de ladite ouverture de passage (6) apte à engager, par ajustement par serrage, un collier (13) faisant saillie de ladite unité d'enregistrement de données.

3. Carte support selon la revendication 2, dans laquelle le bord (6a) de ladite ouverture de passage (6) forme un évidement tourné vers la deuxième face (5) du support plat (2).

4. Carte support selon la revendication 1, dans laquelle lesdits moyens d'engagement comportent au moins un redan de prise (14) formé en correspondance avec un bord circonférentiel intérieur (6a) de ladite ouverture de passage (6) et définissant un ressaut d'accouplement (14a) tourné du côté opposé par rapport à un axe géométrique (X) de ladite ouverture de passage (6) pour s'engager par ajustement par serrage dans un trou de centrage (9) ménagé dans ladite unité d'enregistrement de données (7).

5. Carte support selon la revendication 4, dans laquelle ledit redan de prise (14) a une conformation annulaire concentrique à ladite ouverture de passage (6).

6. Carte support selon la revendication 4, dans laquelle ledit ressaut d'accouplement (14a) forme un évidement tourné vers la deuxième face (5) du support plat (2).

7. Carte support selon la revendication 1, dans laquelle elle comporte en outre un enfoncement de surface (11) formé dans la première face (4) pour loger ladite unité d'enregistrement de données (7).

8. Carte support selon la revendication 7, dans laquelle ledit enfoncement de surface (11) a une conformation circulaire.

9. Carte support selon la revendication 8, dans laquelle ledit enfoncement de surface (11) est délimité par un ressaut circonférentiel (12) sensiblement tangent aux grands côtés (3a) dudit bord périmétrique de profil rectangulaire du support plat (2).

10. Carte support selon la revendication 9, dans laquelle ledit ressaut circonférentiel (12) est agencé de manière à engager, par ajustement par serrage, un bord circonférentiel extérieur (8a) de ladite unité d'enregistrement de données (7).

11. Carte support selon la revendication 4, dans laquelle ledit ressaut d'accouplement (14a) forme un évidement tourné vers la deuxième face (5) du support plat (2).

12. Carte support selon la revendication 1, comprenant en outre une autre unité d'enregistrement de données (17) accessible de ladite deuxième face du support plat (2).

13. Carte support selon la revendication 12, dans laquelle ladite unité d'enregistrement supplémentaire (17) est réalisée sous forme d'une micropuce incorporée dans le support plat (2) et ayant des éléments de contact (17a) apparaissant sur ladite deuxième face (5).

14. Carte support selon la revendication 1, dans laquelle ladite ouverture de passage (6) est disposée concentrique au bord périmétrique (3a, 3b) du support plat (2).

15. Carte support selon la revendication 1, comprenant en outre des moyens pour centrer le support plat (2) dans un dispositif de lecture de ladite unité d'enregistrement.

16. Carte support selon la revendication 15, dans laquelle lesdits moyens de centrage comportent des épaulements de centrage définis par des enfoncements de surface auxiliaires présents dans ladite première face (3) à proximité des petits côtés (3a) dudit bord périmétrique de profil rectangulaire (3a, 3b).

17. Carte support selon la revendication 1, dans laquelle ladite unité d'enregistrement (7) comporte:
- un corps en forme de plaque (8) ayant un trou traversant de centrage (9);
- au moins une zone (10) destinée à l'enregistrement de données et s'étendant concentrique audit trou traversant de centrage (9);
- des moyens d'interface mécanique (13) pour l'engagement de ladite unité d'enregistrement (7) sur la carte support (1).

18. Carte support selon la revendication 17, dans laquelle lesdits moyens d'interface mécanique comportent au moins un élément d'ajustement par serrage (13).

19. Carte support selon la revendication 17, dans laquelle lesdits moyens d'interface mécanique comportent un collier (13) faisant saillie en sens axial en correspondance avec le trou traversant de centrage (9) et définissant un épaulement (13a) tourné du côté opposé par rapport à un axe géométrique du trou traversant (9) et destiné à s'engager par ajustement par serrage dans ladite ouverture de passage (6).

20. Carte support selon la revendication 19, dans laquelle ledit épaulement (13a) définit un évidement tourné vers le corps en forme de plaque (8).

21. Carte support selon la revendication 17, dans laquelle lesdits moyens d'interface mécanique comportent un bord dudit trou traversant de centrage (9) destiné à engager par ajustage par serrage un redan de prise (14) faisant partie desdits moyens d'engagement disposés sur ladite première face (4) du support plat (2).

22. Carte support selon la revendication 21, dans laquelle le bord dudit trou traversant (9) forme un évidement tourné vers une face de lecture (7b) de ladite unité d'enregistrement (7).

23. Carte support selon la revendication 17, dans laquelle lesdits moyens d'interface mécanique comportent un bord circonférentiel extérieur (8a) dudit corps en forme de plaque (8), destiné à engager par ajustement par serrage mécanique un ressaut circonférentiel (12) présenté par ledit support plat (2).

24. Carte support selon la revendication 23, dans laquelle ledit bord circonférentiel extérieur (8a) définit un évidement tourné vers une face de lecture (7b) dudit corps en forme de plaque (8).

25. Carte support selon la revendication 17, dans laquelle ledit corps en forme de plaque (8) est essentiellement défini par un demi-disque d'un disque DVD(Disque Numeriqué Polyvalent = Digital Versatile Disc).
